(19) Europäisches Patentamt
European Patent Office
Office européen des brevets

(11) **EP 4 610 922 A1**

(12) **EUROPEAN PATENT APPLICATION**

(43) Date of publication:
**03.09.2025 Bulletin 2025/36**

(21) Application number: **25158750.7**

(22) Date of filing: **19.02.2025**

(51) International Patent Classification (IPC):
**G06T 5/60** *(2024.01)*   **G06T 5/73** *(2024.01)*

(52) Cooperative Patent Classification (CPC):
**G06T 5/73; G06T 5/60;** G06T 2207/20081;
G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2024 JP 2024027985**

(71) Applicant: **CANON KABUSHIKI KAISHA
Tokyo 146-8501 (JP)**

(72) Inventors:
• **HIASA, Norihito
Tokyo (JP)**
• **KOBAYASHI, Masakazu
Tokyo (JP)**

(74) Representative: **WESER & Kollegen
Patentanwälte PartmbB
Radeckestraße 43
81245 München (DE)**

(54) **TRAINING METHOD, TRAINING APPARATUS, IMAGE PROCESSING METHOD, IMAGE PROCESSING APPARATUS, AND PROGRAM**

(57)    An image processing method includes generating a first estimated image (222) in which a deblurring component of a captured image (221) generated by imaging of an image pickup apparatus (102) is estimated by inputting the captured image into a first machine learning model (231) configured to perform processing that does not depend on luminance saturation of the captured image, and generating a second estimated image (223) in which artifacts around an area corresponding to a luminance saturation area of the captured image in the first estimated image are suppressed, by inputting the first estimated image into a second machine learning model (232).

FIG. 3

**Description**

BACKGROUND

Technical Field

The present disclosure relates to an image processing technology that deblurs an image using a machine learning model.

Description of Related Art

Japanese Patent Application Laid-Open No. 2021-140758 discloses a method for suppressing artifacts as false structures that do not actually exist around an area in which luminance (or brightness) is saturated (referred to as a luminance saturation area hereinafter) in deblurring an image using a neural network (NN). A second embodiment in Japanese Patent Application Laid-Open No. 2021-140758 discloses a method for generating a ground truth image in which a luminance saturation area has a blur amount (weak sharpness) larger than that of other areas, and training an NN using the ground truth image. The thus trained NN can suppress artifacts that are otherwise likely to occur around the luminance saturation area, in exchange for reducing a deblurring effect around the luminance saturation area.

SUMMARY

The present disclosure in its first aspect provides a training method as specified in claims 1 to 9.
The present disclosure in its second aspect provides a training apparatus as specified in claim 10.
The present disclosure in its third aspect provides an image processing method as specified in claims 11 to 16.
The present disclosure in its fourth aspect provides an image processing apparatus as specified in claim 17.
The present disclosure in its fifth aspect provides a program as specified in claims 18 and 19.
Further features of various embodiments of the disclosure will become apparent from the following description of embodiments with reference to the attached drawings.

BRIEF DESCRIPTION OF THE DRAWINGS

FIG. 1 illustrates the influence of luminance saturation on a captured image in first and second embodiments.
FIG. 2 illustrates deblurring a captured image in the first and second embodiments.
FIG. 3 is a block diagram illustrating the configuration of an image processing system according to the first embodiment.
FIG. 4 is an external view of the image processing system according to the first embodiment.
FIG. 5 is a flowchart of processing of generating a first training dataset in the first and second embodiments.
FIG. 6 illustrates a relationship between a first original image and a first blurred image in the first and second embodiments.
FIG. 7 is a flowchart illustrating processing of training a first machine learning model in the first and second embodiments.
FIGs. 8A and 8B illustrate the structure of a first machine learning model in the first and second embodiments.
FIG. 9 is a flowchart of processing of generating a second training dataset in the first and second embodiments.
FIG. 10 illustrates a relationship between a second original image, a second blurred image, and a second output image in the first and second embodiments.
FIG. 11 illustrates the configuration of a second machine learning model according to the first and second embodiments.
FIG. 12 illustrates a function that is used for the second machine learning model according to the first and second embodiments.
FIG. 13 is a flowchart illustrating processing of deblurring a captured image in the first and second embodiments.
FIG. 14 illustrates the generation of a second weight map in the first and second embodiments.
FIG. 15 is a block diagram illustrating the configuration of an image processing system according to the second embodiment.
FIG. 16 is an external view of the image processing system according to the second embodiment.

DETAILED DESCRIPTION

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

In the method disclosed in Japanese Patent Application Laid-Open No. 2021-140758, it is difficult to reduce the computational load of the NN while a deblurring effect around the luminance saturation area is maintained. In the luminance saturation area, the original object information is attenuated not only by blurring but also by clipping of a signal value. Thus, unless the NN performs different deblurring for the vicinity of the luminance saturation area and other areas, a deblurred image in which artifacts are suppressed. However, since deblurring around the luminance saturation area is a very difficult task, the NN is to have a sufficient degree of freedom. The degree of freedom can be increased by increasing the number of layers in the convolution layer, the number of filters corresponding to the number of output channels of the convolution layer, and the like. This is similarly applicable to the case of a fully connected layer. However, as the degree of freedom of the NN increases, the computational load increases.

The computational load of the NN can be reduced by the method disclosed in Japanese Patent Application Laid-Open No. 2021-140758 in a case where deblurring is not performed around the luminance saturation area. This can be achieved by training the NN by making a blur amount around the luminance saturation area of the ground truth image equal to an input image (training image in Japanese Patent Application Laid-Open No. 2021-140758) to the NN corresponding to the ground truth image. However, this NN cannot acquire any deblurring effect around the luminance saturation area.

Referring now to the accompanying drawings, a description will be given of embodiments according to the present disclosure.

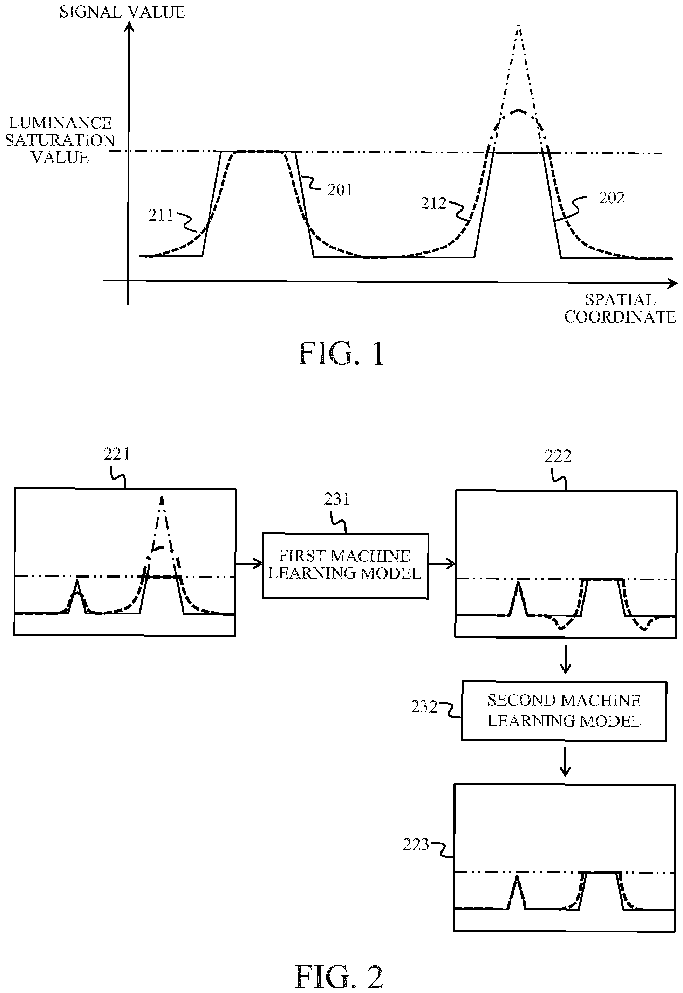

Before the embodiments are specifically described, matters common to each embodiment will be described. Referring now to FIG. 1, a description will be given of the influence of luminance saturation in deblurring a captured image. An alternate long and two short dashes line in FIG. 1 indicates a luminance saturation value of an image sensor, and a dashed line indicates a signal distribution of the captured image captured by the image sensor. The captured image contains blurs due to aberrations and diffractions in an optical system. An alternate long and short dash line in FIG. 1 indicates an original signal distribution before clipping processing due to the luminance saturation value is performed. A solid line indicates the captured image in a case where no blur exists, that is, the signal distribution of the object.

An undersaturation blurred image 211 has only signal values below the luminance saturation value, and is therefore not affected by clipping with the luminance saturation value. This is similarly applicable to an undersaturation object 201, which is an object before the undersaturation blurred image 211 is blurred. The undersaturation object 201 illustrated here is an object with a flat structure having a signal value equal to the luminance saturation value. The object corresponding to the undersaturation blurred image 211 may have a signal value greater than the luminance saturation value.

On the other hand, the saturated blurred image 212 has a signal value that exceeds the luminance saturation value and is affected by clipping with the luminance saturation value. A saturated object 202 is an object before the saturated blurred image 212 is blurred. Deblurring is a task that brings the captured image of the dashed line closer to the object of the solid line. However, as understood from the relationship between the undersaturation blurred image 211 and the undersaturation object 201 and the relationship between the saturated blurred image 212 and the saturated object 202, completely different deblurring is to be executed according to the presence or absence of the influence of luminance saturation. For example, the undersaturation blurred image 211 has an area with signal values less than those of the undersaturation object 201, but the saturated blurred image 212 has signal values always greater than those of the saturated object 202.

It is a very difficult task to bring the saturated blurred image 212 closer to the saturated object 202. This is because the original signal distribution lost by clipping with the luminance saturation value is unknown, and even if an estimation is made from the remaining surrounding information, the original signal distribution cannot be uniquely determined.

Nevertheless, by learning a large number of corresponding relationships such as the saturated blurred image 212 and the saturated object 202, a machine learning model can deblur the luminance-saturated blurred image while suppressing artifacts.

For this purpose, the machine learning model is to have a sufficient degree of freedom, and thus a computational load increases. In a machine learning model with a few degrees of freedom and a small computational load, artifacts will occur around the luminance saturation area even after deblurring. As in Japanese Patent Application Laid-Open No. 2021-140758, in a case where the deblurring effect in the luminance saturation area is reduced, the degree of freedom for the machine learning model may be slightly reduced, but the degree of freedom cannot be significantly reduced except for no deblurring at all.

Accordingly, each embodiment achieves deblurring that has a deblurring effect on a luminance-saturated blurred image, while suppressing the computational load of the machine learning model and artifacts, using the configuration illustrated in FIG. 2.

A blurred captured image 221 is input into a first machine learning model 231. A signal distribution of the captured image 221 is illustrated by a dashed line. For clarity, the signal distribution of the object with no blur is illustrated by a solid line, the luminance saturation value is illustrated by an alternate long and two short dashes line, and a signal distribution before clipping with the luminance saturation value is illustrated by an alternate long and short dash line for reference.

The first machine learning model 231 has learned a large amount of only the corresponding relationships between the undersaturation blurred image 211 and the undersaturation object 201 illustrated in FIG. 1. Thus, the first machine learning model 231 performs deblurring assuming that the entire captured image 221 is a blurred image that is not luminance-saturated. In other words, the first machine learning model 231 performs processing that does not depend on (or is independent of) the luminance saturation of the captured image 221. In this case, the first machine learning model 231 does not learn any deblur for the difficult luminance-saturated blurred image, so the degree of freedom can be reduced.

In a first estimated image 222 output from the first machine learning model 231, the non-luminance-saturated blurred image is correctly deblurred. However, the luminance-saturated blurred image is slightly deblurred (equivalent to the case of a non-luminance-saturated blurred image), but artifacts occur. The artifacts here are, for example, a decrease in signal value that is not present in the original object (solid line), such as the first estimated image 222.

The first estimated image 222 is input into the second machine learning model 232. Thereby, a second estimated image 223 in which artifacts are suppressed is generated. The second machine learning model 232 suppresses artifacts around the luminance saturation area of the input first estimated image 222, and hardly performs deblurring for the difficult luminance-saturated blurred image. Therefore, the second machine learning model 232 can also secure the accuracy of the task with a small degree of freedom.

Compared to the captured image 221, the second estimated image 223 is an image in which a non-luminance-saturated blurred image is deblurred with high accuracy, and a luminance-saturated blurred image is deblurred with a reduced deblurring effect, and artifacts are suppressed.

To achieve the above configuration, the first machine learning model 231 and the second machine learning model 232 are trained using different training data. The training data is a pair of a ground truth image and an input image to the machine learning model corresponding to the ground truth image.

The first machine learning model 231 is trained with a first ground truth image based on a first original image having a signal value equal to or less than a first signal value corresponding to the luminance saturation value of the captured image, and a first blurred image described later. The second machine learning model 232 is trained with a second ground truth image based on a second original image having a signal value greater than a second signal value corresponding to the luminance saturation value, and a second blurred image. The reason why the second signal value and the first signal value may be different values will be explained in the first embodiment described later.

A specific description will now be given of the embodiments.

FIRST EMBODIMENT

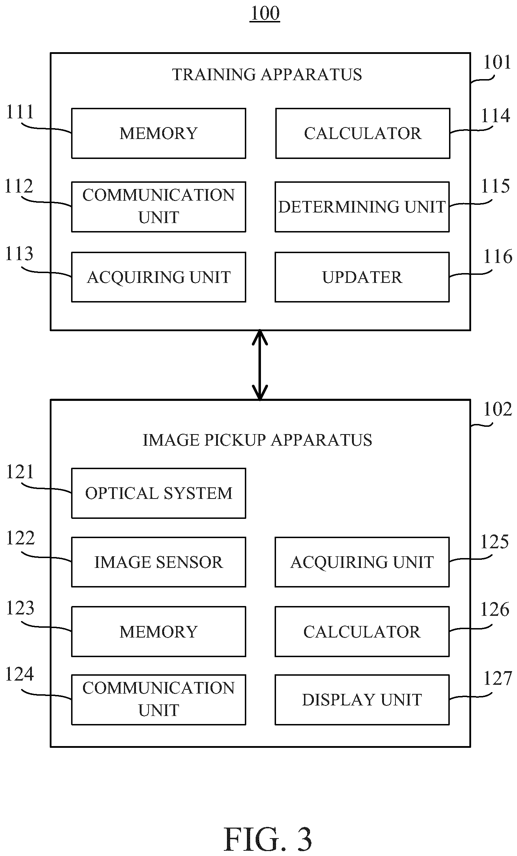

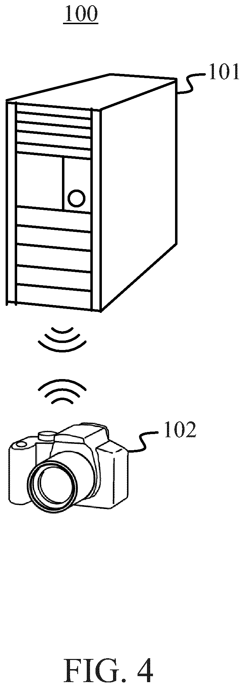

FIG. 3 illustrates the configuration of an image processing system 100 in the first embodiment. FIG. 4 illustrates the external appearance of the image processing system 100. The image processing system 100 includes a training apparatus 101 and an image pickup apparatus 102.

The image pickup apparatus 102 includes as its components an optical system 121, an image sensor 122, a memory 123, a communication unit 124, an acquiring unit 125, a calculator 126, and a display unit 127. The optical system 121 condenses light incident from the object space and forms an object image. The image sensor 122 receives the object image and photoelectrically converts it to generate a captured image 221 as image data. The captured image 221 receives predetermined image processing such as the removal of defective pixels in the calculator 126 and is stored in the memory 123.

The captured image 221 is blurred due to aberrations and diffractions in the optical system 121. The calculator 126 deblurs the captured image 221 using the first and second machine learning models 231 and 232 and generates a deblurred image. The captured image 221 to be deblurred may be an undeveloped raw image or a developed image. In this embodiment, deblurring is performed for the raw image. Deblurring may be performed automatically during imaging, or may be performed at a user's discretion on the stored captured image 221. The model parameters that are used in the first and second machine learning models 231 and 232 are trained by the training apparatus 101, and are previously acquired by the image pickup apparatus 102 via the communication units 112 and 124 and stored in the memory 123. Details of the training of the first and second machine learning models 231 and 232 and deblurring by the trained first and second machine learning models 231 and 232 will be described later. The deblurred image after deblurring is displayed on the display unit 127 and stored in the memory 123.

A description will now be given of the training of the first and second machine learning models 231 and 232 executed by the training apparatus 101, i.e., the determination of model parameters and the generation of training data used for each training. Model parameters are parameters of the machine learning model determined by training. For example, each weight coefficient of the fully connected layer, the filter coefficient of the convolution layer, biases, etc.

The training apparatus 101 includes a memory 111, a communication unit 112, an acquiring unit 113, a calculator 114, a determining unit 115, and an updater 116 as components, and the training processing and training data generating processing are performed by the corresponding components.

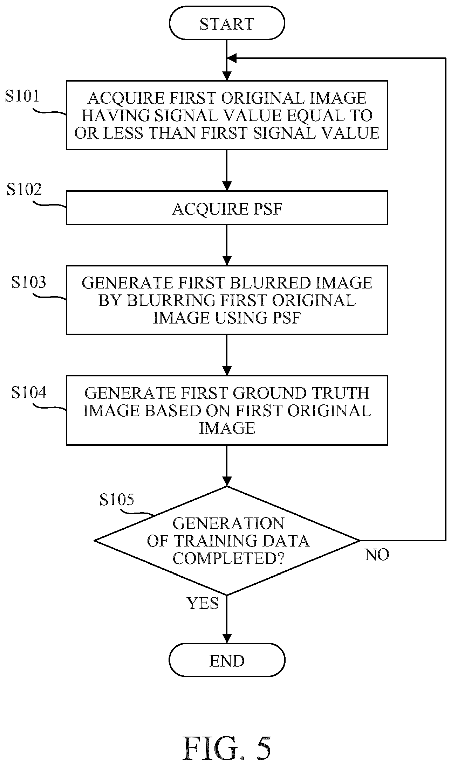

A flowchart in FIG. 5 illustrates processing for generating a first training dataset that is used for training the first machine learning model 231. The first training dataset includes a plurality of training data. The training data is a pair of a first ground truth image and a first blurred image which is an input image into the first machine learning model 231 corresponding to the first ground truth image.

In step S101 (first step), the acquiring unit 113 acquires one or more first original images from the memory 111. The first original image may be a real-life image or a computer graphics (CG) image. In this embodiment, in order to deblur a raw image as described above, the raw image is used as a real-life image. In a case where the raw image has only a specific color component in each pixel such as a Bayer array, demosaicing processing is performed so that all pixels have all color components (such as three colors of red (R), green (G), and blue (B)). At this time, reducing (downscaling) the first original image can reduce the influence of differences in Nyquist frequency for each color and errors due to demosaicing. In addition, the reduction can suppress the influence of blurs and noises due to aberrations and diffractions in the optical system generated in capturing the first original image, and prepare a high-quality first original image.

The first original image has only (consists of) signal values equal to or less than the first signal value. In a case where the first original image has a signal value greater than the first signal value, it is clipped with the first signal value before step S103. The first signal value is a signal value corresponding to the luminance saturation value of the captured image 221 input into the trained first machine learning model 231. The luminance saturation value is an upper limit that the signal value in the captured image 221 can take. However, the luminance saturation value of the captured image 221 and the first signal value do not necessarily have to be equal. For example, in a case where an image (first blurred image or captured image 221) is input into the first machine learning model 231 and the signal value of the image is normalized, the upper limits of the signal values of both images do not need to match before normalization. A specific example of a normalization method will be described later in step S202.

In step S102, the acquiring unit 113 acquires one or more point spread functions (PSFs) from the memory 111. The PSF has RGB color components. The PSF corresponds to the blur caused by aberrations and diffractions in the optical system 121 in the image pickup apparatus 102. The PSF of the optical system 121 changes according to conditions including the state of the optical system 121 (focal length, F-number, and focal length) and image plane coordinates (two-dimensional spatial coordinates in the vertical and horizontal directions on the image-side focal plane). Thus, the acquiring unit 113 determines the above conditions and acquires a PSF corresponding to the conditions. At this time, a plurality of PSFs corresponding to each of a plurality of different conditions may be acquired. Instead of the PSF, an optical transfer function (OTF) may be acquired, or data approximating the PSF or OTF may be acquired. The focal length is a distance between the object that is in focus on the optical system 121 and either the image sensor 122 or the optical system 121. The order of steps S101 and S102 may be reversed.

In this embodiment, a target of deblurring is blurs caused by aberrations and diffractions in the optical system 121, but other blurs can also be deblurred. Other blurs include a defocus blur, vibration, air fluctuation, etc. In deblurring these blurs, the corresponding PSFs are acquired in step S102.

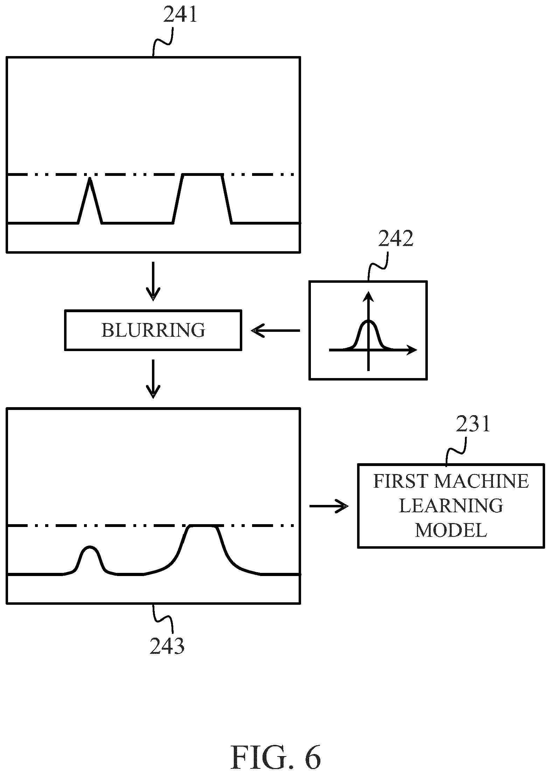

In step S103 (second step), the calculator 114 blurs the first original image with the PSF and generates a first blurred image. FIG. 6 illustrates an overview of the processing in step S103. In step S103, the first original image 241 is blurred with the PSF 242 to generate a first blurred image 243. The first blurred image 243 is an image input into the first machine learning model 231 in training the first machine learning model 231. An alternate long and two short dashes line in FIG. 6 indicates the first signal value.

In a case where there are the plurality of first original images 241 or PSFs 242, the plurality of first blurred images 243 are generated for their combinations. The PSF 242 is convolved with the first original image 241 for each color. In a case where an OTF is used, the product of the OTF and the frequency characteristic (the result of the Fourier transform) of the first original image 241 is calculated for each color. This embodiment simply performs blurring processing for each RGB color, but may perform the blurring processing for each single wavelength component and combine them with weighting corresponding to each color of the color filter of the image sensor 122. Although the reduction of the first original image 241 was described in step S101, the sampling density of the PSF 242 may be set finer than the pixels of the image sensor 122, and the first original image 241 before reduction may be blurred and then reduced down to the same sampling density as the pixels of the image sensor 122.

The calculator 114 samples the result of blurring the first original image 241 with the PSF 242 using the color filter array (Bayer array in this embodiment) of the image sensor 122, and generates the first blurred image 243 by adding noise generated by the image sensor 122 to the sampling result. Since the noise intensity changes according to the ISO speed of the image sensor 122, the ISO speed is determined and the corresponding noise is added. In a case where noise is not added to the first blurred image 243, the trained first machine learning model 231 will amplify the noise at the same time as deblurring and thus noise may be added to the first blurred image 243. In a case where the captured image 221 previously receives noise removal before being input into the first machine learning model 231, the noise addition to the first blurred image 243 is not essential.

In step S104 (third step), the calculator 114 acquires a first ground truth image based on the first original image 241. The first ground truth image is an image in which the same object as the first blurred image 243 exists and which has stronger sharpness (smaller blur amount) than that of the first blurred image 243. The sharpness intensity can be expressed by the steepness of the edge of the image (magnitude of the absolute value of the spatial differential) or the magnitude of each frequency component in the frequency characteristics of the image (result of Fourier transform). In a case where a plurality of first blurred images 243 are generated in step S103, the calculator 114 acquires a plurality of first ground truth images corresponding to each of the plurality of first blurred images 243.

The first ground truth image may be generated by using the first original image 241 as it is, or by performing any processing for the first original image 241. For example, the first original image 241 may be blurred with a PSF with a blur amount smaller than that of the PSF 242. In a case where the first original image 241 is reduced in generating the first blurred image 243, the first ground truth image is generated by similarly reducing it. In this embodiment, the first original image 241 is reduced and sampled using a Bayer array if necessary, and then provided with noise that is correlated with the noise that has been added in generating the first blurred image 243 in step S103, to generate the first ground truth image.

In a case where the first blurred image 243 contains noise and the first ground truth image does not contain noise, the first machine learning model 231 is trained to perform noise removal. Since it is difficult to perform deblur and noise removal simultaneously and a large degree of freedom is required for the first machine learning model 231, noise is also added to the first ground truth image in this embodiment. In a case the noise is correlated to the first blurred image 243 and the first ground truth image, the trained first machine learning model 231 can perform deblur, suppressing noise fluctuations. In a case where the noise in the first blurred image 243 and the noise in the first ground truth image are not correlated, the trained first machine learning model 231 may perform noise removal. This principle is disclosed in J. Lehtinen, et al., "Noise2Noise: Learning Image Restoration without Clean Data", JCML 2018.

In a case where noise is added, the signal value may exceed the first signal value, so the first blurred image 243 and the first ground truth image are clipped with the first signal value. In a case where noise is not added to the first blurred image 243, it is unnecessary to add noise to the first ground truth image. The processing of step S104 may be performed at any time as long as it is performed between steps S101 and S105.

In step S105, the determining unit 115 determines whether or not the generation of the first training dataset has been completed. In a case where it has been completed, the determining unit 115 stores all of the generated training data in the memory 111 as the first training dataset. In a case where it has not yet been completed, the flow returns to step S101, and the acquiring unit 113 and the calculator 114 acquire a new first original image 241 and a new PSF 242 corresponding to the new conditions, and similarly repeats the processing of steps S102 to S104.

This embodiment deblurs all blur caused by aberrations and diffractions in the optical system 121 using common model parameters. Hence, the first training dataset is to include a first blurred image 243 blurred with various PSFs 242 corresponding to the optical system 121. Whether or not the generation of the first training dataset has been completed can be determined based on whether or not the PSFs 242 that are used to generate the first blurred images 243 included in the first training dataset have sufficient variation. In a case where noise is added to the first blurred image 243, whether or not noises of various ISO speeds which the image sensor 122 can have are included is also added to the criteria for determination.

The above processing can generate a pair of the first blurred image 243 that is not affected by the luminance saturation and a first ground truth image that has no corresponding blur or has a small corresponding blur. By training the first machine learning model 231 with this first training dataset, the first machine learning model 231 learns only deblurring of the blurred image that is not affected by the luminance saturation.

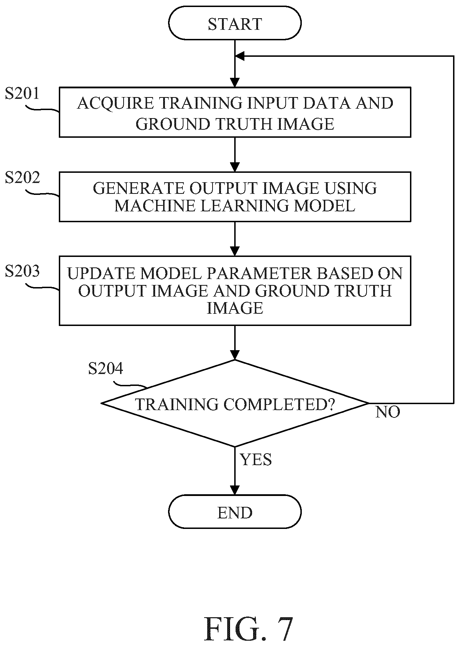

Next, a method (processing) of training the first machine learning model 231 with the first training dataset will be described using the flowchart of FIG. 7.

In step S201, the acquiring unit 113 acquires one or more sets of training data from the first training dataset. The training data includes training input data including the first blurred image 243, and the first ground truth image. The training input data is data to be input into the first machine learning model 231 during training. In this embodiment, in addition to the first blurred image 243, blur specifying information (first blur specifying information) that is information specifying the blur assigned to the first blurred image 243 is input into the first machine learning model 231. The blur specifying information in this embodiment is information on five values of the focal length, F-number, focal length, and vertical and horizontal image plane coordinates of the optical system 121 corresponding to the PSF 242 assigned to the first blurred image 243. The information on the five values may indicate the five values themselves, or may be information that can be converted into five values.

However, the blur specifying information may be other information as long as it can specify the blur. For example, it may be information on the two-dimensional intensity distribution of the PSF 242 or the OTF, or information on each coefficient, etc., obtained by approximating them using a Gaussian mixture model. The information on the intensity distribution, coefficient, etc. may be information indicating the intensity distribution, coefficient, etc. itself, or may be information that can be converted into the intensity distribution, coefficient, etc. In a case where the image pickup apparatus 102 is a lens interchangeable type camera, the optical system 121 may be connectable to a plurality of image pickup apparatuses 102 with different pixel pitches. In this case, since the size of the PSF 242 also changes depending on the pixel pitch, the blur specifying information may include information on the pixel pitch. The information on the pixel pitch may be information indicating the pixel pitch itself or information that can be converted into the pixel pitch.

In the first blurred image 243, the number of pixels, which is the number of elements in the vertical direction, horizontal direction, and channel direction, is (H, W, C), and in this embodiment assuming the Bayer array, C=1. The acquiring unit 113 rearranges the first blurred image 243 into (H/2, W/2, 4) before inputting it into the first machine learning model 231. At this time, a pixel in which an index is an odd number in the vertical and horizontal directions is set to C=1, and a pixel in which an index is an odd number in the vertical direction and an index is an even number in the horizontal direction is set to C=2. Similarly, a pixel in which an index is an even number in the vertical direction and an index is an odd number in the horizontal direction is set to C=3, and a pixel in which an index is an even number in the vertical and horizontal directions is set to C=4. However, the rearrangement method is not limited to this example. Since a blurred shape is different among the three colors of RGB, each color is divided into a plurality of channels (G is divided into two channels) to facilitate deblurring.

In this embodiment, the blur specifying information is a map having five values for each channel: the focal length, F-number, focal length, and vertical and horizontal image plane coordinates of the optical system 121. The number of elements in each direction of the map is (H/2, W/2, 5), and the map is concatenated with the first blurred image 243 in the channel direction.

In addition to the blur specifying information, noise information indicating the intensity of noise added to the first blurred image 243 may be input into the first machine learning model 231. For example, a map having values indicating the variance and standard deviation of noise for a certain luminance is concatenated with the first blurred image 243 in the channel direction and input into the first machine learning model 231. At the time of estimation after training, if the noise characteristic of the image sensor 122 is known, the variance and standard deviation of noise corresponding to the captured image 221 can be specified from the information on the ISO speed during imaging. Inputting the noise information to the first machine learning model 231 can easily distinguish between noise and the object, and the noise fluctuations associated with deblurring can be suppressed.

In step S202 (fourth step), the calculator 114 inputs the training input data into the first machine learning model 231 and generates a first output image. In a case where the upper limit (first upper limit) of the signal value of the image input into the first machine learning model 231 and the upper limit of the signal value of the first blurred image 243 are not equal, the signal value of the first blurred image 243 is scaled so that these upper limits are the same, and then input into the first machine learning model 231. Scaling is expressed by the following equation (1).

$$I_{nor} = \frac{I-B}{S-B} L_{M1} \quad \cdots (1)$$

In equation (1), Inor is a signal value after scaling, I is a signal value of each pixel of the first blurred image 243, S is the upper limit of the signal value, B is a black level of optical black, and LM1 is the first upper limit. In this embodiment, the first upper limit LM1 is 1. Therefore, normalization is performed for the first blurred image 243 by equation (1) so that the upper limit of the signal value becomes 1.

On the other hand, the lower limit of the signal value may have a negative value rather than 0 due to the influence of noise. In generating the first blurred image 243 from the first original image 241, unless processing of multiplying all pixels by a uniform coefficient other than 1, that is, processing of changing brightness, is performed, the upper limit of the signal value of the first blurred image 243 will match the first signal value. In a case where the first original image 241 and the first blurred image 243 are normalized from the beginning, scaling by equation (1) is unnecessary. In this case, the first signal value, the first upper limit, and the upper limit of the signal value of the first blurred image 243 are all 1, and are the same value.

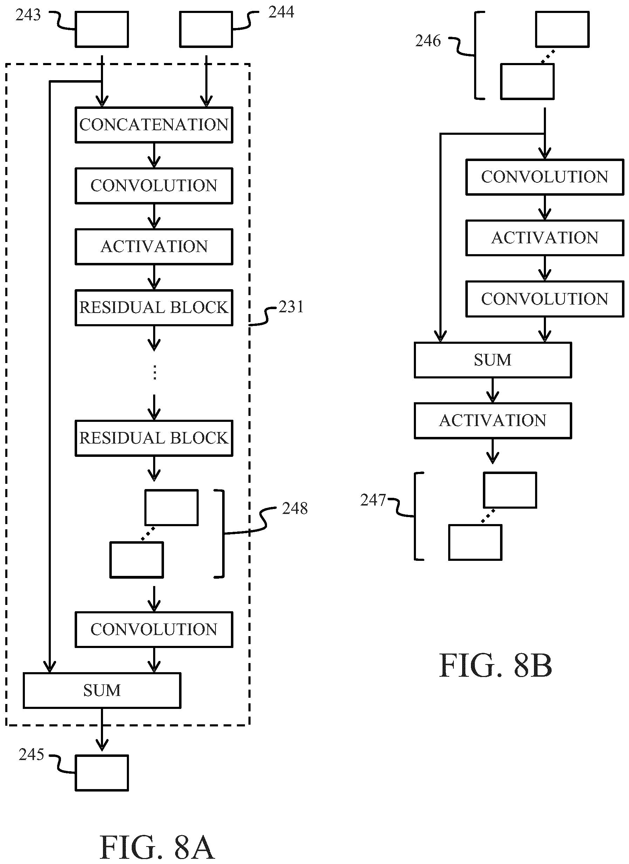

The first machine learning model 231 in this embodiment uses a convolutional NN (CNN) with the configuration illustrated in FIGs. 8A and 8B. However, other machine learning models such as Multi-Layer Perceptron (MLP), Vision Transformer (ViT), Generative Adversarial Network (GAN), and diffusion model may also be used.

The first blurred image 243 and the blur specifying information 244 included in the training input data are input into the first machine learning model 231, concatenated in the channel direction, and then input into the convolution layer (Convolution in FIG. 8). The blur specifying information 244 may be normalized before input, similarly to the first blurred image 243. The input method is not limited to this example, and the first blurred image 243 and the blur specifying information 244 may be input into separate convolution layers and the generated feature maps may be concatenated. The blur specifying information 244 may be input as a five-dimensional vector instead of a map into the fully connected layer, converted into a feature map, and then concatenated with the first blurred image 243.

The number of taps in the vertical and horizontal directions of the filter in each convolution layer is (3, 3). The number of filters corresponding to the number of channels of the feature map output from the convolution layer is 24. However, the number of taps and the number of filters are not limited to these examples. Activation is an activation function, and rectified linear unit (ReLU) is used, but Leaky ReLU or a sigmoid function may also be used.

A residual block has the configuration illustrated in FIG. 8B. The residual block generates a feature map 247 output in the configuration illustrated in FIG. 8B from an input feature map 246. Sum represents a sum of each element. In this embodiment, after passing through ten residual blocks, the result output from the last convolution layer is summed with the first blurred image 243 to generate the first output image 245. Instead of taking the sum at the end, the residual image, which is a deblurred component that is summed with the first blurred image 243, may be set to the first output image 245. In a case where a plurality of first blurred images 243 are obtained, the first output image 245 is generated for each of them. In generating the first output image 245, the first machine learning model 231 generates the first feature map 248. In FIG. 8A, the first feature map 248 is the input of the last convolutional layer, but a feature map at another position may be used.

In step S203 (fifth step), the updater 116 updates the model parameters of the first machine learning model 231 based on an error between the first output image 245 and the first ground truth image. That is, the first machine learning model 231 is trained. The model parameters in this embodiment are the filter coefficient and bias of each convolutional layer. In the first training, the model parameters are determined by random numbers. This embodiment uses the mean square error (MSE) of the first output image 245 and the first ground truth image as a loss function, but may use another function. For example, a mean absolute error (MAE) or the perceptual loss may be used.

Since the number of elements in the first output image 245 is (H/2, W/2, 4), the updater 116 rearranges the first ground truth image in the same way as the first blurred image 243 to match the number of elements in each direction with the first output image 245. In a case where the first output image 245 is a residual image, the updater 116 adds it to the first blurred image 243 and then calculates an error from the first ground truth image, or calculates an error from the result of subtracting the first blurred image 243 from the first ground truth image. In a case where there are a plurality of first ground truth images and first output images 245, the updater 116 calculates an error for each of them. In a case where the scales of the signal values of the first ground truth image and the first output image 245 do not match, for example, in a case where the first output image 245 is normalized but the first ground truth image is not normalized, the updater 116 scales one of them and then calculates the error. To update the model parameters, an error backpropagation method or the like is used.

In step S204, the determining unit 115 determines whether the training has been completed. If not, the flow returns to step S201 to acquire one or more new sets of the training input data and first ground truth image. In a case where the training has been completed, the model parameters are stored in the memory 111. The determining unit 115 determines whether the training has been completed based on the number of updates, the magnitude of an update amount of the model parameter, and the like.

The above processing can generate a first machine learning model 231 that has learned the deblurring of only blurred images that are not affected by luminance saturation. By not learning deblurring of blurred images that are affected by luminance saturation, which is highly difficult, the first machine learning model 231 can perform highly accurate deblurring even with a small degree of freedom. Since the deblurring of blurred images that are affected by luminance saturation has not been learned, artifacts occur around the luminance saturation area. These artifacts are suppressed by the second machine learning model 232, which will be described later.

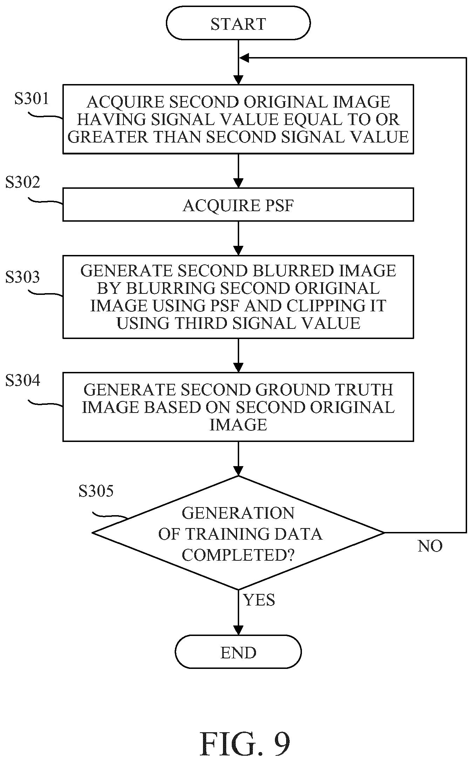

Referring now to the flowchart in FIG. 9, a description will be given of a method (processing) for generating a second training dataset that is used for training the second machine learning model 232.

In step S301 (sixth step), the acquiring unit 113 acquires a second original image having a signal value greater than a second signal value. The second signal value corresponds to the luminance saturation value of the captured image 221 and is a signal value that also corresponds to an upper limit of a signal value of an image input into the first machine learning model 231. Similarly to the description of step S101, the respective values do not necessarily have to be the same. Here, it is unnecessary that all of the training data included in the second training dataset is generated from a second original image having a signal value greater than the second signal value.

In step S302, the acquiring unit 113 acquires a PSF in a manner similar to step S102.

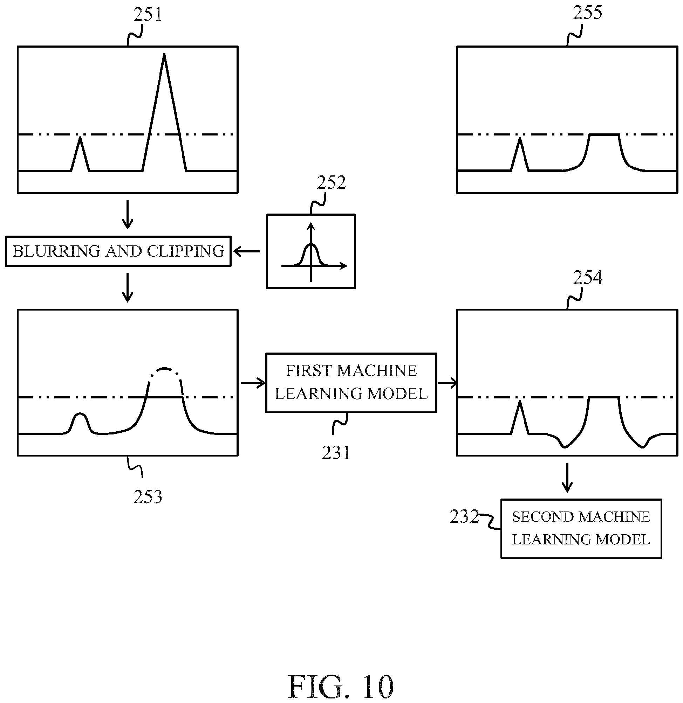

In step S303 (seventh step), the calculator 114 blurs the second original image with the PSF, then clips it with a third signal value, and generates a second blurred image. FIG. 10 illustrates an overview of step S303. The calculator 114 blurs the second original image 251 with the PSF 252, then clips it with the third signal value, and generates a second blurred image 253. Sampling and noise addition in the color filter array of the image sensor 122 are similar to step S103.

The third signal value corresponds to the luminance saturation value of the captured image 221 and is a signal value that also corresponds to the upper limit of the signal value of the image input into the first machine learning model 231. In generating the second blurred image 253 from the second original image 251, the second signal value and the third signal value coincide with each other unless all pixels are multiplied by a uniform coefficient other than 1 (or unless the sum of the PSFs 252 is not 1). In FIG. 10, an alternate long and two short dashes line of the second original image 251 represents the second signal value, and an alternate long and two short dashes line of the second blurred image 253 represents the third signal value. In training the second machine learning model 232, the second blurred image 253 is input into the first machine learning model 231, which will be described in detail later.

In step S304 (eighth step), the calculator 114 generates a second ground truth image 255 based on the second original image 251. The second ground truth image 255 has sharpness different from that of the second blurred image 253 based on the magnitude of the signal value of the second blurred image 253. The difference in sharpness between the first area of the second blurred image 253 and the area of the second ground truth image 255 corresponding to the first area is smaller than the difference in sharpness between the second area of the second blurred image 253 and the area of the second ground truth image 255 corresponding to the second area. In this case, the first area of the second blurred image 253 has an average signal value larger than that of the second area of the second blurred image 253. Alternatively, the first area of the second blurred image 253 includes luminance saturated pixels, and the second area of the second blurred image 253 does not include luminance saturated pixels.

A specific description will be given of a method in this embodiment for generating the second ground truth image 255 having the above properties. First, the calculator 114 rearranges the second blurred image 253, which is a Bayer array, in a manner similar to that described in step S201 to convert it into four channels. The calculator 114 generates a luminance saturation map in which an area of the four-channeled second blurred image 253 that is equal to or greater than the third signal value (corresponding to the luminance saturation value of the captured image 221) is set to 1, and the other areas are set to 0.

The calculator 114 generates a one-channel map in which each channel of the luminance saturation map is blurred with the PSF 252 of the corresponding color component and then the maximum value is adopted in the channel direction. The calculator 114 upscales the map by twice the number of elements in each of the vertical and horizontal directions using the bilinear interpolation or the like, so as to make the same number of elements as that of the second blurred image 253 and thereby generate a first weight map.

The calculator 114 further generates a third ground truth image by clipping the second original image 251 with the second signal value and performing scaling to match the scale of the signal value with that of the second blurred image 253 (equalizing the second signal value and the third signal value). The third ground truth image has sharpness higher than that of the second blurred image 253. The second ground truth image 255 $G_2$ is generated by the following weighted average equation (2):

$$G_2 = I_2 \, f_{min}(cM, 1) + G_3[1 - f_{min}(cM, 1)] \quad \cdots (2)$$

where $G_3$ is the third ground truth image, M is the first weight map, $I_2$ is the second blurred image 253, c is an arbitrary coefficient equal to or greater than 0, and $f_{min}$ is a MIN function that adopts the smaller of the two arguments.

Due to equation (2), an area unrelated to the luminance saturation of the second blurred image 253 has sharpness equivalent with that of the third ground truth image, and the second ground truth image 255 having less sharpness can be generated from a surrounding area that is more luminance-saturated. The sharpness around the luminance-saturated area can be controlled by the coefficient c, and as c increases, the sharpness becomes closer to that of the second blurred image 253.

In generating the first weight map, the maximum value is taken in the channel direction (i.e., adjacent RGGB) in order to prevent unintended coloring in the second ground truth image 255 caused by the weights of the first weight map changing for each color. The luminance saturation map that is used to generate the first weight map may be generated from the second output image 254 as a model output in a case where the second blurred image 253 is input into the first machine learning model 231. The model output refers to at least one of the data generated in a case where the second blurred image 253 is input into the first machine learning model 231. More specifically, the model output refers to at least one of a plurality of feature maps which are the output of each convolution layer and the second output image 254.

The method of generating the second ground truth image 255 is not limited to this example. For example, the second ground truth image 255 may be generated by multiplying the second original image 251 by the luminance saturation map of the second blurred image 253, converting the map blurred by the PSF 252 into four channels, and repeating processing similar to that described above.

In this embodiment, as in step S104, correlated noise is added to the second blurred image 253 and the second ground truth image 255. This is to suppress noise fluctuations as in step S104.

In step S305, the determining unit 115 determines whether or not the generation of the second training dataset has been completed. If completed, all of the generated training data is stored in the memory 111 as the second training dataset. If not completed, the flow returns to step S301, a new second original image 251 and PSF 252 are obtained under new conditions, and similar processing is repeated. As in step S105, a second blurred image 253 blurred by various PSFs 252 generated in the optical system 121 is included in the second training dataset.

The above processing can generate a pair of the second blurred image 253, which includes both blurred images affected by luminance saturation and blurred images not affected by luminance saturation, and the corresponding second ground truth image 255. In a case where the second blurred image 253 is input into the first machine learning model 231, a second output image 254 is generated. In the second output image 254, the blurred image not affected by luminance saturation is deblurred with high accuracy, but the blurred image affected by luminance saturation has not been learned, so although it is deblurred to some extent, artifacts are generated.

The second machine learning model 232 is trained based on an error between the third output image generated by inputting the second output image 254 into the second machine learning model 232 and the second ground truth image 255. In the area of the second blurred image 253 that is not affected by luminance saturation, the second output image 254 and the second ground truth image 255 are deblurred, so the second machine learning model 232 is trained to do almost nothing in that area.

On the other hand, in the area of the second blurred image 253 that is affected by luminance saturation, the second output image 254 is deblurred to some extent, but artifacts occur. The second ground truth image 255 in that area is deblurred to some extent and there are no artifacts. Therefore, the second machine learning model 232 is trained to suppress artifacts while the deblurring effect on the blurred image affected by luminance saturation is maintained. Since it focuses only on suppressing artifacts, the second machine learning model 232 can achieve high accuracy even with a small degree of freedom.

Referring now to the flowchart in FIG. 7, a description will be given of a method for training the second machine learning model 232 with the second training dataset. In step S201, the acquiring unit 113 acquires one or more sets of training data from the second training dataset. The training data includes training input data including a second blurred image 253, and a second ground truth image 255. The training input data includes data to be input into the first machine learning model 231 during training and data to be input into the second machine learning model 232. The first machine learning model 231 receives the second blurred image 253 and blur specifying information (second blur specifying information) that is information for specifying the blur assigned to the second blurred image 253. The second blur specifying information may be the same information as the first blur specifying information described above, or may be different information.

The second machine learning model 232 receives the second output image 254 generated by the luminance saturation map and the first machine learning model 231. The luminance saturation map is a map indicating a luminance saturation area of either the second blurred image 253 or the second output image 254. For example, the map is a map in which the luminance saturation area of the second blurred image 253 is set to 1 and the other areas are set to 0. Thus, the training input data includes the second blurred image 253, the blur specifying information, and the luminance saturation map.

In step S202 (ninth step), the calculator 114 generates a third output image from the training input data using the first machine learning model 231 and the second machine learning model 232. Here, the second blurred image 253 and the blur specifying information are input into the first machine learning model 231 in a manner similar to that of the training of the first machine learning model 231, and the second output image 254 is generated. As in the training of the first machine learning model 231, the upper limit (first upper limit) of the signal value of the image input into the first machine learning model 231 and the upper limit of the signal value of the second blurred image 253 are set to the same value. In a case where these upper limits are not the same value, the signal value of the second blurred image 253 is scaled so that they are equal, and then input into the first machine learning model 231.

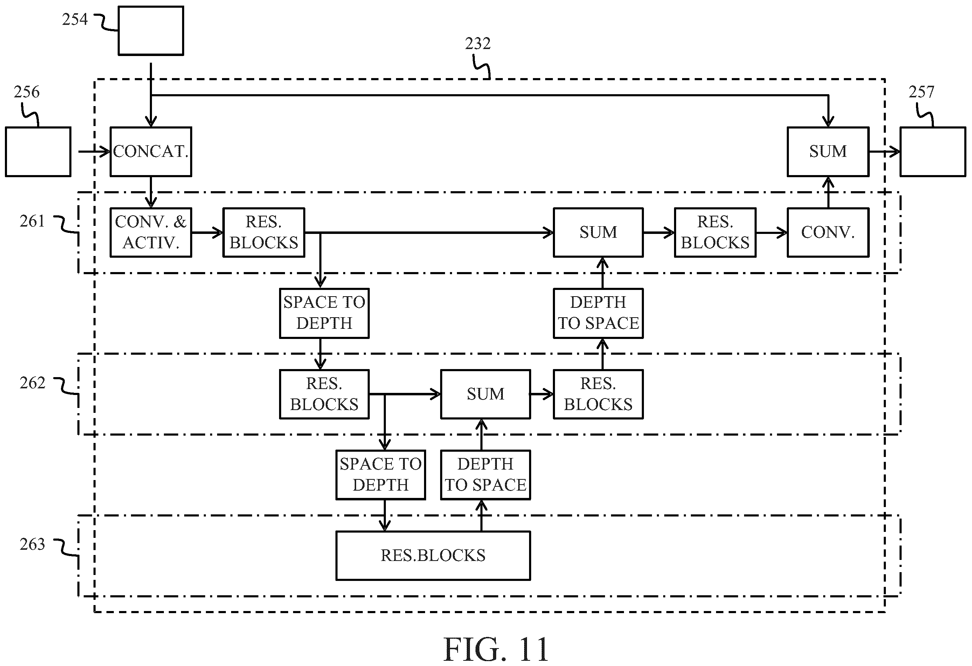

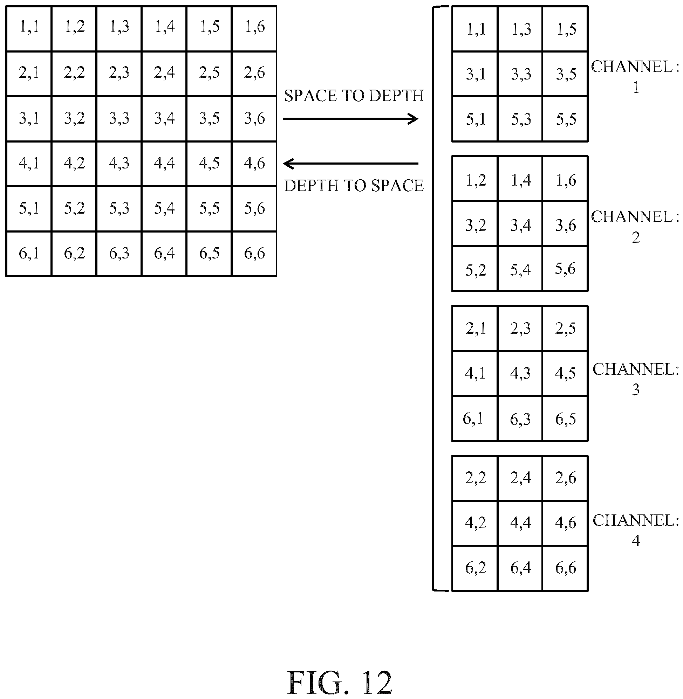

In the first embodiment, the second machine learning model 232 is, but is not limited to, a CNN having the configuration illustrated in FIG. 11. In FIG. 11, Concat. represents concatenation in the channel direction, Conv. represents a convolutional layer, and Activ. represents an activation function (ReLU in the first embodiment). Res. Blocks represents a structure in which one or more residual blocks illustrated in FIG. 8B (two in the first embodiment) are connected. Space to Depth and Depth to Space are functions that perform rearranging illustrated in FIG. 12. In a case where data with the number of elements in the vertical, horizontal, and channel directions of (h, w, c) is input, Space to Depth rearranges the data to (h/2, w/2, 4). In FIG. 12, the vertical and horizontal ranges are set to $2 \times 2$ as one unit, but this is not limited to this example. For example, $3 \times 3$ may be set to one unit, and in this case the output becomes (h/3, w/3, 9). Depth to Space is a function that performs the inverse conversion of Space to Depth.

In the first embodiment, the second output image 254 and the luminance saturation map 256 are concatenated in the channel direction and input into the convolution layer. However, the inputting method into the convolution layer is not limited to this example. Since the number of elements in each direction of the second output image 254 is (H/2, W/2, 4), the luminance saturation map 256 is similarly rearranged to set the number of elements to (H/2, W/2, 4). As with the first machine learning model 231, noise information may be further input into the second machine learning model 232. A second blurred image 253 may be further input into the second machine learning model 232.

Instead of the second output image 254, a second feature map may be input into the second machine learning model 232, which is a model output generated by inputting the second blurred image 253 into the first machine learning model 231. The second feature map may be input into the second machine learning model 232 together with the second output image 254. The second feature map is a feature map generated at a position corresponding to the first feature map 248 in a case where the second blurred image 253 is input into the first machine learning model 231 instead of the first blurred image 243. Since the second feature map contains information about deblurring that can generate the second output image 254, a similar effect can be obtained even if the second feature map is input into the second machine learning model 232.

In order for the second feature map to contain sufficient information about deblurring, it may be generated in a layer close to a layer that outputs the second output image 254. More specifically, the feature map output in the layer after 90% or more of all product-sum operations executed in the first machine learning model 231 have been executed may be the second feature map.

As illustrated in FIG. 8A, in a case where the second feature map corresponding to the first feature map 248 is generated before the second output image 254 corresponding to the first output image 245 is generated, the calculation of the first machine learning model 231 may be interrupted up to the generation of the second feature map, and the second output image 254 may not be generated.

The number of taps of the filter in each layer of the second machine learning model 232 is (3, 3), and the number of filters is 16 for the layer included in the first stage 261, 64 for the layer included in the second stage 262, and 256 for the layer included in the third stage 263. However, the number of taps and the number of filters, and the number of stages (corresponding to the number of Space to Depth and Depth to Space) are not limited to these. The second machine learning model 232 generates a third output image 257.

In step S203 (tenth step), the updater 116 updates the model parameters of the second machine learning model 232 based on an error between the third output image 257 and the second ground truth image 255. That is, the second machine learning model 232 is trained. Here, as in the training of the first machine learning model 231, the MSE of the third output image 257 and the second ground truth image 255 is used as the loss function, but is not limited to this example. In a case where the third output image 257 is a residual image to be added to the second blurred image 253 or the second output image 254, the error is similarly calculated.

In step S204, the determining unit 115 determines whether the training has been completed. In a case where it has not been completed, the flow returns to step S201 to obtain one or more new sets of training input data and the second ground truth image 255. In a case where it has been completed, the model parameters are stored in the memory 111.

In this embodiment, the second machine learning model 232 is trained after the first machine learning model 231 is trained, but the order is not limited to this example. For example, the model parameters of the first machine learning model 231 may be updated, and then the model parameters of the second machine learning model 232 may be updated, and the first machine learning model 231 may be updated again, and so on.

The above processing can generate the second machine learning model 232 that suppresses artifacts around the luminance saturation area that occur due to deblurring.

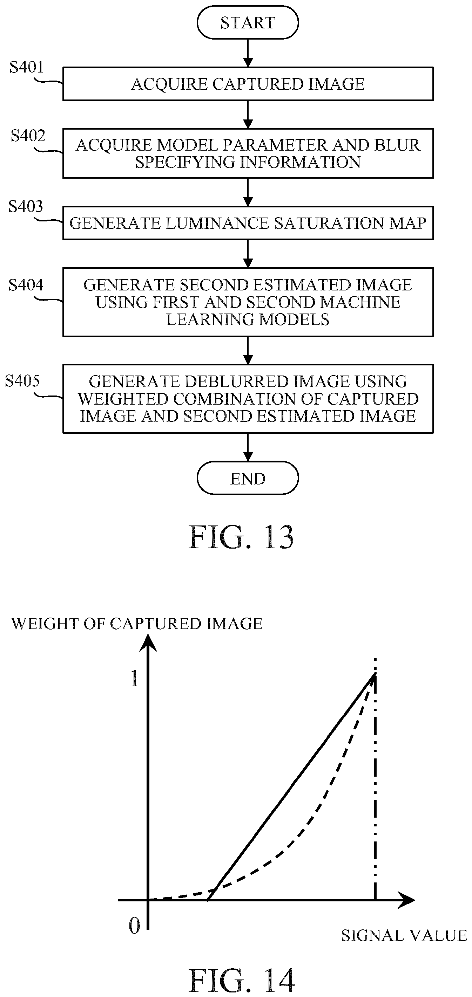

Referring now to a flowchart of FIG. 13, a description will be given of deblurring of the captured image 221 using the first machine learning model 231 and the second machine learning model 232 that have been trained.

In step S401, the acquiring unit 125 acquires the captured image 221. The captured image 221 may be the entire image, or a partial image thereof.

In step S402, the acquiring unit 125 acquires the trained model parameters of the first machine learning model 231 and the second machine learning model 232, and blur specifying information that specifies the blur in the captured image 221. In a case where the image pickup apparatus 102 is a lens interchangeable type camera and model parameters exist for each type of optical system 121, the type of optical system 121 that has been used for imaging is specified from the metadata of the captured image 221, and the corresponding trained model parameters are acquired.

As the blur specifying information, the acquiring unit 125 acquires information on the focal length, F-number, and focal length during imaging from the metadata assigned to the captured image 221. The information on the focal length, F-number, and focal length may be information indicating the focal length, F-number, and focal length themselves, or may be information convertible into them.

In a case where the captured image 221 is a partial image, the acquiring unit 125 acquires information on the position where the partial image is extracted from the entire image, and acquires the image plane coordinates. In a case where the captured image 221 is input into the first machine learning model 231, the number of elements of the captured image 221 is rearranged from $(H_0, W_0, 1)$ to $(H_0/2, W_0/2, 4)$, as in the training. The map representing the image plane coordinates at this time represents the spatial coordinates in the vertical and horizontal directions for every two pixels in the captured image 221 before the number of elements is rearranged, and the number of elements in the map is $(H_0/2, W_0/2, 2)$.

In imaging while performing image stabilization that reduces image blur by shifting the image sensor 122, the acquiring unit 125 acquires a shift amount (shift amount from the optical axis) of the image sensor 122 during imaging from the metadata and reflects this in the value of the image plane coordinates. The number of elements in the map representing the state of the optical system 121 (focal length, F-number, focal length) is $(H_0/2, W_0/2, 3)$, and each channel has the same value. In a case where the blur specifying information further includes the pixel pitch of the image sensor 122, the map has a total of six channels.

In step S403, the calculator 126 generates a luminance saturation map representing a luminance saturation area in the captured image 221. More specifically, the calculator 126 acquires a luminance saturation value from the metadata of the captured image 221, and generates a luminance saturation map in which a luminance saturation area having a signal value equal to or greater than the luminance saturation value is indicated as 1, and other areas are indicated as 0. In a case where the luminance saturation map is generated from the second output image 254 during training of the second machine learning model 232, the calculator 126 generates the luminance saturation map from the first estimated image 222 generated by inputting the captured image 221 into the first machine learning model 231. The order of the processing of step S403 does not matter as long as it is performed after the processing of step S401 and before the calculation using the second machine learning model 232 in step S404.

In step S404 (eleventh and twelfth steps), the calculator 126 uses the first machine learning model 231 and the second machine learning model 232 to generate a second estimated image 223 in which blurs caused by aberrations and diffractions in the optical system 121 included in the captured image 221 have been deblurred. The calculator 126 also inputs the captured image 221 and the blur specifying information into the first machine learning model 231 to generate a first estimated image 222. At this time, the captured image 221 is normalized and input into the first machine learning model 231, similarly to the training. The first machine learning model 231 executes processing that does not depend on (or is independent of) the luminance saturation of the captured image 221. The first estimated image 222 is deblurred with high accuracy in the area of the captured image 221 that is not affected by the luminance saturation. On the other hand, the first estimated image 222 is deblurred to some extent in the area of the captured image 221 that is affected by the luminance saturation, but artifacts are generated. In a case where the first output image 245 is a residual image during training, the first estimated image 222 becomes a residual image that is deblurred by adding it to the captured image 221. Therefore, the first estimated image 222 is an image obtained by estimating the deblurring component of the captured image 221.

The calculator 126 inputs the first estimated image 222 and the luminance saturation map into the second machine learning model 232 and generates the second estimated image 223. The second estimated image 223 is an image in which artifacts around an area of the first estimated image 222 corresponding to the luminance-saturated area in the captured image 221 are suppressed. In a case where the third output image 257 is a residual image to be added to the second blurred image 253 (or the second output image 254) during training, the second estimated image 223 becomes a residual image to be added to the captured image 221 (or the first estimated image 222). By adding the residual image to the captured image 221, an image in which artifacts around the luminance saturation area are suppressed and which is deblurred can be obtained.

In a case where the second feature map is input into the second machine learning model 232 during training of the second machine learning model 232, the third feature map generated by inputting the captured image 221 into the first machine learning model 231 is also input into the second machine learning model 232 during estimation after the training. The third feature map is a feature map, and is a map generated at a position corresponding to the first feature map 248 by inputting the captured image 221 into the first machine learning model 231.

In step S405, the calculator 126 generates a deblurred image by calculating a weighted average (weighted combination) of the captured image 221 and the second estimated image 223. In the second estimated image 223, the deblurring effect may appear discontinuous in a high-luminance gradation area that includes luminance saturation and where the signal value changes gradually. Calculating the weighted average with the captured image 221 can suppress this discontinuity.

The calculator 126 generates a second weight map indicating the weight for each pixel of the captured image 221 based on the magnitude of the signal value of the captured image 221 (or the second estimated image 223). At this time, the second weight map is generated so that the weight of the captured image 221 increases as the signal value of the pixel of the captured image 221 increases.

Since the captured image 221 is a raw image in a Bayer array, the calculator 126 performs white balance adjustment after subtracting the black level from the signal value. Furthermore, the calculator 126 rearranges the values into four channels by Depth to Space, and generates a one-channel map using the maximum value in the channel (color) direction. Since the number of elements in the vertical and horizontal directions of the map is half that of the captured image 221, the map is upscaled to the same number of elements by bilinear interpolation or the like. The weight of each pixel of the captured image 221 is determined from the signal value of the upscaled map. The weight of each pixel of the captured image 221 is determined, for example, by conversion from a signal value to the weight illustrated in FIG. 14. In FIG. 14, an alternate long and two short dashes line indicates a luminance saturation value. As indicated by a solid or dashed line, the weight is increased as the signal value increases. However, the method of determining the weight is not limited to this example.

The calculator 126 performs weighted averaging for the captured image 221 and the second estimated image 223 using the second weight map determined based on the upscaled map, and generates a final deblurred image. In a case where the second estimated image 223 is a residual image, a similar weighted combination can be performed by subtracting the second weight map from a map having all values of 1, calculating the product of the weight map and the second estimated image 223, and adding the product to the captured image 221. The second estimated image 223 may be the final deblurred image without performing step S405.

The above processing can suppress artifacts around the luminance saturation area, deblur the captured image, and reduce the computational load of the machine learning model.

Another configuration will now be described. In this embodiment, the blur specifying information may not be input into the second machine learning model 232. This reason will be described below.

It is difficult to separate an object and a blur with high accuracy from only a blurred image, so the blur specifying information may be input in deblurring various blurs generated in the optical system 121. In a case where there is a gentle edge in an image, it is extremely difficult to distinguish whether the gentle edge is a result of a strongly sharp edge blurred by a large blur, or is a result of an object with a gradation blurred by a very small blur. Deblurring with high accuracy can be performed by providing the first machine learning model 231 with information on the blur occurring at the edge position as the blur specifying information.

In contrast, the task of the second machine learning model 232 is to suppress artifacts around the luminance saturation area. Since this artifact is relatively easy to determine from the image, the artifact can be suppressed with sufficient accuracy without inputting the blur specifying information. On the other hand, in a case where the blur specifying information is input into the second machine learning model 232, the second machine learning model 232 attempts to execute different processing according to the value of the blur specifying information. Thus, a degree of freedom is required to some extent so as to secure the accuracy of the task, and the computational load of the second machine learning model 232 increases.

The number of elements in the vertical and horizontal directions in the plurality of feature maps generated in the first machine learning model 231 may be larger than half the number of elements in the vertical and horizontal directions in the first blurred image 243.

The above is the configuration during the training of the first machine learning model 231, and the similar content during estimation after the training is as follows. The number of elements in the vertical and horizontal directions in the plurality of feature maps generated in the first machine learning model 231 may be larger than half the number of elements in the vertical and horizontal directions in the captured image 221. Alternatively, the number of elements in the vertical and horizontal directions in the plurality of feature maps generated in the first machine learning model 231 may be larger than half the number of elements in the vertical and horizontal directions in the first output image 245.

The above is the configuration during the training of the first machine learning model 231, and the similar content during estimation after the training is as follows. The number of elements in the vertical and horizontal directions in the plurality of feature maps generated in the first machine learning model 231 may be larger than half the number of elements in the vertical and horizontal directions in the first estimated image 222.

The reason why the above two configurations are desirable will be described. The first machine learning model 231 may be capable of performing deblur according to blurs of various shapes, rather than performing uniform processing, and therefore requires a degree of freedom to some extent. On the other hand, one method of reducing the computational load of the machine learning model includes a configuration in which the number of elements in the vertical and horizontal directions in the machine learning model is once downscaled to equal to or less than half, and then upscaled back to the original number of elements, such as the configuration illustrated in FIG. 11.

In FIG. 11, Space to Depth corresponds to downscaling, and Depth to Space corresponds to upscaling. In addition, downscaling may be performed by pooling or by making the stride of the convolution layer greater than 1. Similarly, upscaling may be performed by bilinear or bicubic interpolation, or by increasing the stride of the deconvolution layer to a value greater than 1. In a case where a configuration that performs downscaling and upscaling within a model is adopted with the first machine learning model 231 that does not have a sufficient degree of freedom, artifacts are likely to occur in the first output image 245 (or the second output image 254 or the first estimated image 222).

For example, in the configuration of FIG. 11, in a case where the degree of freedom of the machine learning model is not sufficient for the task to be performed, variations occur for each channel of the feature map, which are rearranged in the spatial direction by Depth to Space. As a result, lattice-like artifacts may occur within the same color. Thus, the first machine learning model 231 may not be configured to perform downscaling and upscaling within the model.

For example, in a case where zero padding is not performed in the convolution layer, the number of elements in each of the vertical and horizontal directions changes. Thus, the number of elements in each of the vertical and horizontal directions of the feature map in the first machine learning model 231 does not necessarily match the input and output, even without downscaling or upscaling.

The number of elements in the vertical and horizontal directions in at least one of the plurality of feature maps generated in the second machine learning model 232 may be equal to or less than half the number of elements in the vertical and horizontal directions in the second output image 254.

The above is the configuration during training of the second machine learning model 232, and the similar content during estimation after the training is as follows. The number of elements in the vertical and horizontal directions in at least one of the plurality of feature maps generated in the second machine learning model 232 may be equal to or less than half the number of elements in the vertical and horizontal directions in the first estimated image 222. This is because the task performed by the second machine learning model 232 is to suppress artifacts that are easy to distinguish from the object in the input image, and therefore an increase in the computational load is unlikely to occur even in the above model configured to perform downscaling and upscaling.

A luminance saturation map may not be input into the first machine learning model 231. This is because this is similar even during training of the first machine learning model 231, and the first machine learning model 231 may be demanded to perform processing that does not depend on luminance saturation in order to reduce the computational load. By inputting the luminance saturation map, the first machine learning model 231 executes different processing depending on whether or not there is luminance saturation, and thus this may increase the required degree of freedom.

The above configuration can provide an image processing system that can suppress artifacts around the luminance saturation area while suppressing the computational load in deblurring an image using a machine learning model.

SECOND EMBODIMENT

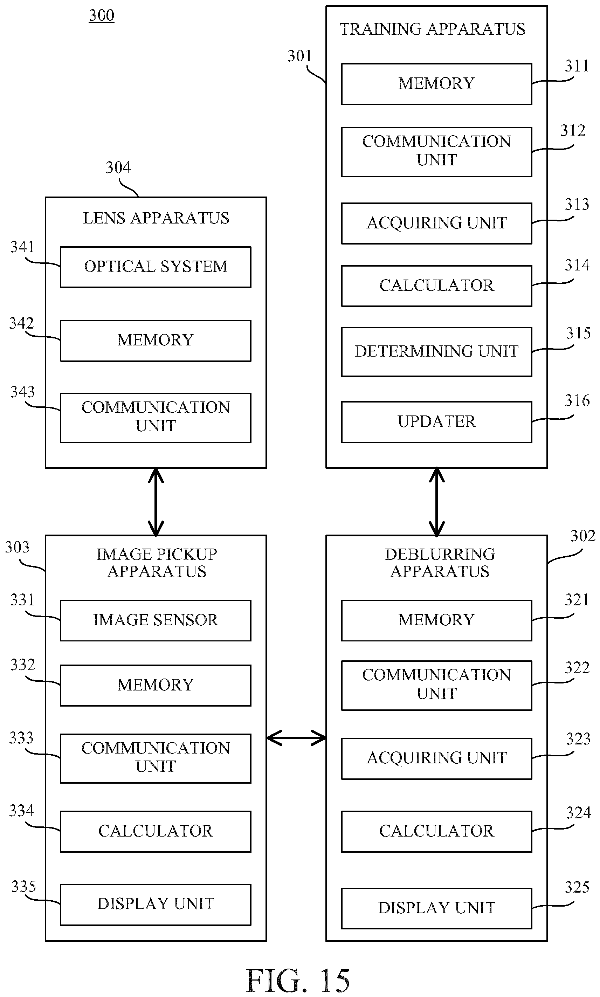

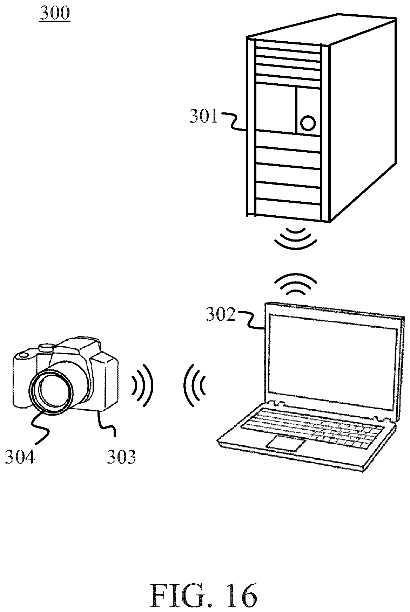

FIG. 15 illustrates the configuration of an image processing system 300 according to a second embodiment. FIG. 16 illustrates the appearance of the image processing system 300. The image processing system 300 includes a training apparatus 301, a deblurring apparatus 302, an image pickup apparatus 303, and a lens apparatus 304.

The image pickup apparatus 303 is a lens interchangeable type camera, and multiple types of lens apparatuses 304 can be connected. An object image formed by the lens apparatus 304 is received by an image sensor 331. The image sensor 331 generates a captured image as image data by photoelectrically converting the object image. The captured image is blurred due to aberrations and diffractions in the optical system 341. The captured image is subjected to necessary processing such as the removal of defective pixels by a calculator 334, and then stored in a memory 332.

The image pickup apparatus 303 acquires information regarding the type of lens apparatus 304 and the state of the optical system 341 (focal length, F-number, focal length) during imaging for capturing the captured image via communication units 343 and 333, and writes this information into the metadata of the captured image.

The deblurring apparatus 302 deblurs the captured image using the first and second machine learning models and generates a deblurred image. The model parameters of the first and second machine learning models are trained by the training apparatus 301, and are previously obtained by the deblurring apparatus 302 via the communication units 312 and 322 and stored in the memory 321. The deblurred image receives other necessary processing by the calculator 324, stored in the memory 321 or 332, and displayed on the display unit 325 or 335.

The training of the first and second machine learning models in this embodiment and deblurring using trained model parameters are similar to those of the first embodiment.

The first training dataset that is used to train the first machine learning model is generated by the training apparatus 301 according to the flowchart of FIG. 5. The processing of each step in FIG. 5 is executed by the corresponding component among the components of the training apparatus 301, that is, the memory 311, the communication unit 312, the acquiring unit 313, the calculator 314, the determining unit 315, and the updater 316. Since multiple types of lens apparatuses 304 can be connected to the image pickup apparatus 303, a separate first training dataset is generated for each type of lens apparatus 304.

Similarly, the training apparatus 301 trains the first machine learning model using the first training dataset (determines model parameters) according to the flowchart of FIG. 7. The model parameters of the first machine learning model are updated for each type of lens apparatus 304. Although the configurations illustrated in FIGs. 8A, 8B and 11 are used as the first and second machine learning models, different configurations may be adopted for each type of lens apparatus 304.

The second training dataset that is used to train the second machine learning model is generated by the training apparatus 301 for each type of lens apparatus 304 according to the flowchart of FIG. 9. The training apparatus 301 trains the second machine learning model using the second training dataset corresponding to each type of lens apparatus 304 according to the flowchart of FIG. 7.

The deblurring apparatus 302 deblurs the captured image that has been blurred due to the aberrations and diffractions in the optical system 341, using the trained first and second machine learning models. The deblurring apparatus 302 includes a memory 321, a communication unit 322, an acquiring unit 323, a calculator 324, and a display unit 325 as components. Deblurring is performed according to the flowchart of FIG. 13, and the processing of each step is executed by the corresponding component in the deblurring apparatus 302.

In step S402, the acquiring unit 323 identifies the type of lens apparatus 304 that was used for imaging from the metadata of the captured image, and acquires model parameters corresponding to the lens apparatus 304 from the memory 321.

The above configuration can provide an image processing system that can suppress artifacts around the luminance saturation area and reduce the computational load in deblurring an image using a machine learning model.

OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)™), a flash memory device, a memory card, and the like.

While the disclosure has described example embodiments, it is to be understood that the disclosure is not limited to the example embodiments. The scope of the following claims is to be accorded the broadest interpretation so as to encompass all such modifications and equivalent structures and functions.

**Claims**

1. A training method for training a first machine learning model (231) and a second machine learning model (232), the training method comprising:

   acquiring a first original image (241) having a signal value equal to or less than a first signal value corresponding to a first upper limit as an upper limit of a signal value of an image to be input into the first machine learning model;
   generating a first blurred image (243) by blurring the first original image;
   acquiring a first ground truth image having sharpness stronger than that of the first blurred image, based on the first original image;
   generating a first output image (245) by inputting the first blurred image into the first machine learning model;
   training the first machine learning model based on the first output image and the first ground truth image;
   acquiring a second original image (251) having a signal value greater than a second signal value corresponding to the first upper limit;
   generating a second blurred image by blurring the second original image and then clipping the second original image that has been blurred with a third signal value corresponding to the first upper limit;
   generating a second ground truth image (255) based on the second original image;
   generating a model output by inputting the second blurred image into the first machine learning model, and generating a third output image by inputting the model output into the second machine learning model; and
   training the second machine learning model based on the third output image (257) and the second ground truth image,
   **characterized in that** the sharpness of the second ground truth image relative to the second blurred image varies according to the signal value of the second blurred image.

2. The training method according to claim 1, **characterized in that** the first blurred image is scaled so that an upper limit of a signal value of the first blurred image is the same as the first upper limit, and then input into the first machine learning model,
   wherein the second blurred image is scaled so that an upper limit of the signal value of the second blurred image is the same as the first upper limit, and then input into the first machine learning model.

3. The training method according to claim 1 or 2, **characterized in that** a difference in sharpness between a first area in the second blurred image and an area corresponding to the first area of the second ground truth image is smaller than a difference in sharpness between a second area in the second blurred image and an area corresponding to the second area of the second ground truth image,
wherein the first area in the second blurred image has an average signal value larger than that of the second area in the second blurred image.

4. The training method according to any one of claims 1 to 3, **characterized in that** generating the first output image includes inputting blur specifying information (244) for specifying a blur in the first blurred image into the first machine learning model,
wherein generating the model output includes inputting blur specifying information for specifying a blur in the second blurred image into the first machine learning model.

5. The training method according to any one of claims 1 to 4, **characterized in that** a plurality of feature maps are generated within the first machine learning model,

   wherein the number of elements in a vertical direction of all of the plurality of feature maps is larger than half the number of elements in a vertical direction of at least one of the first blurred image and the first output image, and
   wherein the number of elements in a horizontal direction of all of the plurality of feature maps is larger than half the number of elements in a horizontal direction of at least one of the first blurred image and the first output image.

6. The training method according to any one of claims 1 to 5, **characterized in that** the model output is at least one of a second output image and a second feature map corresponding to a first feature map generated together with the first output image by inputting the first blurred image into the first machine learning model,

   wherein the second output image is generated by inputting the second blurred image to the first machine learning model,
   wherein a plurality of feature maps are generated within the second machine learning model,
   wherein the number of elements in a vertical direction of at least one of the plurality of feature maps is equal to or less than half the number of elements in a vertical direction of the second output image, and
   wherein the number of elements in a horizontal direction of at least one of the plurality of feature maps is equal to or less than half the number of elements in a horizontal direction of the second output image.

7. The training method according to any one of claims 1 to 6, **characterized in that** the first blurred image and the first ground truth image are generated by adding correlated noises,
wherein the second blurred image and the second ground truth image are generated by adding correlated noises.

8. The training method according to any one of claims 1 to 7, **characterized in that** a luminance saturation map indicating a luminance saturation area of one of the second blurred image and a second output image is input into the second machine learning model,
wherein the second output image is generated by inputting the second blurred image to the first machine learning model.

9. The training method according to any one of claims 1 to 8, **characterized in that** the second ground truth image is generated based on the second blurred image and a third ground truth image having sharpness stronger than that of the second blurred image using a first weighting map generated by blurring a luminance saturation map indicating a luminance saturation area of one of the second blurred image and a second output image,
wherein the second output image is generated by inputting the second blurred image into the first machine learning model.

10. A training apparatus (101, 301) for training a first machine learning model (231) and a second machine learning model (232), the training apparatus comprising:
a processor configured to:

   acquire a first original image (241) having a signal value equal to or less than a first signal value corresponding to a first upper limit as an upper limit of a signal value of an image to be input into the first machine learning model;

generate a first blurred image (243) by blurring the first original image;
acquire a first ground truth image having sharpness stronger than that of the first blurred image, based on the first original image;
generate a first output image (245) by inputting the first blurred image into the first machine learning model;
train the first machine learning model based on the first output image and the first ground truth image;
acquire a second original image (251) having a signal value greater than a second signal value corresponding to the first upper limit;
generate a second blurred image by blurring the second original image and then clipping the second original image that has been blurred with a third signal value corresponding to the first upper limit;
generate a second ground truth image based on the second original image;
generate a model output by inputting the second blurred image into the first machine learning model, and generate a third output image (257) by inputting the model output into the second machine learning model; and
train the second machine learning model based on the third output image and the second ground truth image, **characterized in that** the sharpness of the second ground truth image relative to the second blurred image varies according to the signal value of the second blurred image.

11. An image processing method comprising:

generating a first estimated image (222) in which a deblurring component of a captured image (221) generated by imaging of an image pickup apparatus (102) is estimated by inputting the captured image into a first machine learning model (231) configured to perform processing that does not depend on luminance saturation of the captured image; and
generating a second estimated image (223) in which artifacts around an area corresponding to a luminance saturation area of the captured image in the first estimated image are suppressed, by inputting the first estimated image into a second machine learning model (232).

12. The image processing method according to claim 11, **characterized in that** generating the second estimated image includes inputting a luminance saturation map indicating the luminance saturation area of one of the captured image and the first estimated image, into the second machine learning model.

13. The image processing method according to claim 11 or 12, **characterized in that** generating the first estimated image includes inputting blur specifying information (244) for specifying a blur in the captured image into the first machine learning model.

14. The image processing method according to any one of claims 11 to 13, **characterized in that** a plurality of feature maps are generated within the first machine learning model,

wherein the number of elements in a vertical direction of all of the plurality of feature maps is larger than half the number of elements in a vertical direction of at least one of the captured image and the first estimated image, and
wherein the number of elements in a horizontal direction of all of the plurality of feature maps is larger than half the number of elements in a horizontal direction of at least one of the captured image and the first estimated image.

15. The image processing method according to any one of claims 11 to 14, **characterized in that** a plurality of feature maps are generated within the second machine learning model,

wherein the number of elements in a vertical direction of at least one of the plurality of feature maps is equal to or less than half the number of elements in a vertical direction of the first estimated image, and
wherein the number of elements in a horizontal direction of at least one of the plurality of feature maps is equal to or less than half the number of elements in a horizontal direction of the first estimated image.

16. The image processing method according to any one of claims **11 to** 15, further comprising:
performing weighted combination of the captured image and the second estimated image using a second weight map for the captured image generated based on a magnitude of a signal value of one of the captured image and the second estimated image.

17. An image processing apparatus (101, 301) comprising:
a processor configured to:

# EP 4 610 922 A1

generate a first estimated image (222) in which a deblurring component of a captured image (221) generated by imaging of an image pickup apparatus (102) is estimated by inputting the captured image into a first machine learning model (231); and

generate a second estimated image (223) in which artifacts around an area corresponding to a luminance saturation area of the captured image in the first estimated image are suppressed, by inputting the first estimated image into a second machine learning model (232),

wherein the first machine learning model and the second machine learning mode are trained by a method that includes:

acquiring a first original image having a signal value equal to or less than a first signal value corresponding to a first upper limit as an upper limit of a signal value of an image to be input into the first machine learning model;

generating a first blurred image by blurring the first original image;

acquiring a first ground truth image having sharpness stronger than that of the first blurred image, based on the first original image;

generating a first output image by inputting the first blurred image into the first machine learning model;

training the first machine learning model based on the first output image and the first ground truth image;

acquiring a second original image having a signal value greater than a second signal value corresponding to the first upper limit;

generating a second blurred image by blurring the second original image and then clipping the second original image that has been blurred with a third signal value corresponding to the first upper limit;

generating a second ground truth image based on the second original image;

generating a model output by inputting the second blurred image into the first machine learning model, and generating a third output image by inputting the model output into the second machine learning model; and

training the second machine learning model based on the third output image and the second ground truth image,

wherein the sharpness of the second ground truth image relative to the second blurred image varies according to the signal value of the second blurred image.

18. A program that causes a computer to execute the image processing method according to any one of claims 11 to 16.

19. A program that causes a computer to execute the training method according to any one of claims 1 to 9.

FIG. 1

FIG. 2

## 100

### TRAINING APPARATUS 101

| | |
|---|---|
| 111 MEMORY | CALCULATOR 114 |
| 112 COMMUNICATION UNIT | DETERMINING UNIT 115 |
| 113 ACQUIRING UNIT | UPDATER 116 |

### IMAGE PICKUP APPARATUS 102

| | |
|---|---|
| 121 OPTICAL SYSTEM | |
| 122 IMAGE SENSOR | ACQUIRING UNIT 125 |
| 123 MEMORY | CALCULATOR 126 |
| 124 COMMUNICATION UNIT | DISPLAY UNIT 127 |

## FIG. 3

<u>100</u>

101

102

FIG. 4

START

S101 — ACQUIRE FIRST ORIGINAL IMAGE HAVING SIGNAL VALUE EQUAL TO OR LESS THAN FIRST SIGNAL VALUE

S102 — ACQUIRE PSF

S103 — GENERATE FIRST BLURRED IMAGE BY BLURRING FIRST ORIGINAL IMAGE USING PSF

S104 — GENERATE FIRST GROUND TRUTH IMAGE BASED ON FIRST ORIGINAL IMAGE

S105 — GENERATION OF TRAINING DATA COMPLETED?

NO

YES

END

FIG. 5

241

242

BLURRING

231

FIRST MACHINE
LEARNING
MODEL

243

FIG. 6

START

S201 — ACQUIRE TRAINING INPUT DATA AND GROUND TRUTH IMAGE

S202 — GENERATE OUTPUT IMAGE USING MACHINE LEARNING MODEL

S203 — UPDATE MODEL PARAMETER BASED ON OUTPUT IMAGE AND GROUND TRUTH IMAGE

S204 — TRAINING COMPLETED? — NO

YES

END

FIG. 7

243 ⌐ [ ]     [ ] ⌐ 244

⌐ CONCATENATION

CONVOLUTION

ACTIVATION

RESIDUAL BLOCK  ⌐231

⋮

RESIDUAL BLOCK

[ ]
[ ]  ⌐248

CONVOLUTION

SUM

245 ⌐ [ ]

**FIG. 8A**

246 ⌐ [ ]
[ ]

CONVOLUTION

ACTIVATION

CONVOLUTION

SUM

ACTIVATION

247 ⌐ [ ]
[ ]

**FIG. 8B**

START

S301 — ACQUIRE SECOND ORIGINAL IMAGE HAVING SIGNAL VALUE EQUAL TO OR GREATER THAN SECOND SIGNAL VALUE

S302 — ACQUIRE PSF

S303 — GENERATE SECOND BLURRED IMAGE BY BLURRING SECOND ORIGINAL IMAGE USING PSF AND CLIPPING IT USING THIRD SIGNAL VALUE

S304 — GENERATE SECOND GROUND TRUTH IMAGE BASED ON SECOND ORIGINAL IMAGE

S305 — GENERATION OF TRAINING DATA COMPLETED?

NO

YES

END

FIG. 9

251

255

252

BLURRING AND CLIPPING

FIRST MACHINE
LEARNING MODEL

231

254

253

232 SECOND MACHINE
LEARNING MODEL

# FIG. 10

FIG. 11

| 1,1 | 1,2 | 1,3 | 1,4 | 1,5 | 1,6 |
|-----|-----|-----|-----|-----|-----|
| 2,1 | 2,2 | 2,3 | 2,4 | 2,5 | 2,6 |
| 3,1 | 3,2 | 3,3 | 3,4 | 3,5 | 3,6 |
| 4,1 | 4,2 | 4,3 | 4,4 | 4,5 | 4,6 |
| 5,1 | 5,2 | 5,3 | 5,4 | 5,5 | 5,6 |
| 6,1 | 6,2 | 6,3 | 6,4 | 6,5 | 6,6 |

SPACE TO DEPTH →

← DEPTH TO SPACE

| 1,1 | 1,3 | 1,5 |
|-----|-----|-----|
| 3,1 | 3,3 | 3,5 |
| 5,1 | 5,3 | 5,5 |

CHANNEL: 1

| 1,2 | 1,4 | 1,6 |
|-----|-----|-----|
| 3,2 | 3,4 | 3,6 |
| 5,2 | 5,4 | 5,6 |

CHANNEL: 2

| 2,1 | 2,3 | 2,5 |
|-----|-----|-----|
| 4,1 | 4,3 | 4,5 |
| 6,1 | 6,3 | 6,5 |

CHANNEL: 3

| 2,2 | 2,4 | 2,6 |
|-----|-----|-----|
| 4,2 | 4,4 | 4,6 |
| 6,2 | 6,4 | 6,6 |

CHANNEL: 4

FIG. 12

START

S401 — ACQUIRE CAPTURED IMAGE

S402 — ACQUIRE MODEL PARAMETER AND BLUR SPECIFYING INFORMATION

S403 — GENERATE LUMINANCE SATURATION MAP

S404 — GENERATE SECOND ESTIMATED IMAGE USING FIRST AND SECOND MACHINE LEARNING MODELS

S405 — GENERATE DEBLURRED IMAGE USING WEIGHTED COMBINATION OF CAPTURED IMAGE AND SECOND ESTIMATED IMAGE

END

FIG. 13

WEIGHT OF CAPTURED IMAGE

1

0

SIGNAL VALUE

FIG. 14

300

TRAINING APPARATUS

301

| MEMORY | 311 |
| COMMUNICATION UNIT | 312 |
| ACQUIRING UNIT | 313 |
| CALCULATOR | 314 |
| DETERMINING UNIT | 315 |
| UPDATER | 316 |

304

LENS APPARATUS

| 341 | OPTICAL SYSTEM |
| 342 | MEMORY |
| 343 | COMMUNICATION UNIT |

303

IMAGE PICKUP APPARATUS

| 331 | IMAGE SENSOR |
| 332 | MEMORY |
| 333 | COMMUNICATION UNIT |
| 334 | CALCULATOR |
| 335 | DISPLAY UNIT |

302

DEBLURRING APPARATUS

| MEMORY | 321 |
| COMMUNICATION UNIT | 322 |
| ACQUIRING UNIT | 323 |
| CALCULATOR | 324 |
| DISPLAY UNIT | 325 |

FIG. 15

300

301

302

304      303

FIG. 16

Europäisches
Patentamt

European
Patent Office

Office européen
des brevets

## EUROPEAN SEARCH REPORT

Application Number

EP 25 15 8750

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2021 140758 A (CANON KK) 16 September 2021 (2021-09-16) * paragraph [0071] - paragraph [0078]; figure 1 * | 1-19 | INV. G06T5/60 G06T5/73 |
| A | LIANG CHEN ET AL: "Deep Richardson-Lucy Deconvolution for Low-Light Image Deblurring", ARXIV.ORG, CORNELL UNIVERSITY LIBRARY, 201 OLIN LIBRARY CORNELL UNIVERSITY ITHACA, NY 14853, 10 August 2023 (2023-08-10), XP091590517, * Abstract, Section 4 * | 1-19 | |
| A | CHENWEI YANG ET AL: "Beyond Camera Motion Removing: How to Handle Outliers in Deblurring", ARXIV.ORG, CORNELL UNIVERSITY LIBRARY, 201 OLIN LIBRARY CORNELL UNIVERSITY ITHACA, NY 14853, 24 February 2020 (2020-02-24), XP081606520, * Abstract, Section 3 * | 1-19 | |
| A | ABHISHEK K P ET AL: "Deep Convolutional Neural Network to Handle Saturation in Image Deblurring", 2021 INTERNATIONAL CONFERENCE ON SMART GENERATION COMPUTING, COMMUNICATION AND NETWORKING (SMART GENCON), IEEE, 29 October 2021 (2021-10-29), pages 1-5, XP034056918, DOI: 10.1109/SMARTGENCON51891.2021.9645875 [retrieved on 2021-12-09] * Abstract, Section III * | 1-19 | |

**TECHNICAL FIELDS SEARCHED (IPC)**

G06T

The present search report has been drawn up for all claims

| Place of search | Date of completion of the search | Examiner |
|---|---|---|
| Munich | 29 April 2025 | Tibrewal-Fabricius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8750

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2025

| Patent document cited in search report | Publication date | Patent family member(s) | | Publication date |
|---|---|---|---|---|
| JP 2021140758 A | 16-09-2021 | JP | 7414745 B2 | 16-01-2024 |
| | | JP | 2021140758 A | 16-09-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021140758 A

**Non-patent literature cited in the description**

- **J. LEHTINEN et al.** Noise2Noise: Learning Image Restoration without Clean Data. *JCML*, 2018